# EUROPEAN PATENT APPLICATION

(11) **EP 4 769 235 A1**
(43) Date of publication of application: **01.07.2026**
(21) Application number: 25223146.9
(22) Date of filing: 12.12.2025
(51) Int. Cl.: G06N 5/01, G06N 20/00

(54) **TECHNIQUES FOR IMPROVING DECISIONS RENDERED BASED ON MACHINE LEARNING MODEL OUTPUT**

(30) Priority: 31.12.2024 US 202419006575
(71) Applicant: Microsoft Technology Licensing, LLC, Redmond, WA 98052 (US)
(72) Inventor: ROSS, David William, Redmond, 98052 (US); REINHARDT, Adam Feldman, Redmond, 98052 (US); RYAN, Aidan James, Redmond, 98052 (US); ZHONG, Zimin, Redmond, 98052 (US)
(74) Representative: CMS Cameron McKenna Nabarro Olswang LLP

(57) **Abstract**

Described are examples for rendering decisions based on machine learning (ML) model output. A set of segments for a historical set of data for a division of interest, and associated budgets for the decision of interest, can be obtained. For each segment in the set, a budget for incorrect decisions rendered based on output from the ML model can be computed. For each data entry in a current set of data, a current decision can be rendered based on a configured cutoff value and also a shadow decision based on the candidate cutoff value for a segment of the set of segments associated with the data entry. The candidate cutoff value can be promoted to replace the configured cutoff value, for rendering subsequent decisions for a subsequent set of data, based on comparing the shadow decisions for the current set of data based on the budget for incorrect decisions.

## Description

### BACKGROUND

Machine learning (ML) models exist for receiving a set of input and providing an output based on data used to train the ML model to attempt to provide appropriate or desired outputs. One problem in data science is the translation of ML model(s) to render appropriate business decisions, and rendering decisions based on ML model output can require human intervention at various steps in the process. For example, in the field of payment fraud risk, ML model(s) can output a probability that a purchase is fraudulent, but human intervention from a business may decide how much risk is tolerable. This risk tolerance can vary widely based on various factors, including financial factors (e.g. current/future revenue, current/future fraud loss) and non-financial factors (e.g. customer experience). A business can have a differential fraud risk tolerance for different areas of the business, such as different departments, product lines, subscriptions levels, or other divisions or layers of the business or associated products. In practice, the business sets hundreds of segments and must maintain the optimal risk tolerance level for each area of business based on changing factors, such as customer purchases, fraudulent activity, and risk model updates. The maintenance process is highly time-intensive for an analyst to manually perform, and segment-by-segment updates do not account for overall performance of all segments together.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

**In** an example, a device for rendering decisions based on machine learning (ML) model output is provided that includes one or more memories storing instructions, and one or more processors coupled to the one or more memories. The one or more processors are configured to execute the instructions to group historical data for a division of interest into a set of segments based on a value of one or more parameters, obtain, for the division of interest, a budget for error tolerance for decisions rendered based on output from the ML model, compute, for each segment in the set of segments and based on the budget, a candidate cutoff value for ML model output for rendering decisions, rendering, for each data entry in a current set of data, a current decision based on a configured cutoff value and a shadow decision based on the candidate cutoff value for a segment of the set of segments associated with the data entry, storing information related to the shadow decision and the current decision in a data store, and promoting the candidate cutoff value to replace the configured cutoff value, for rendering subsequent decisions for a subsequent set of data, based on comparing the shadow decisions for the segment associated with the candidate cutoff value, obtained from the data store, based on the budget for incorrect decisions.

In another example, a computer-implemented method for rendering decisions based on ML model output is provided that includes obtaining, for a historical set of data for a division of interest, a set of segments of the historical set of data defined by a value of one or more parameters, obtaining, the division of interest, a budget for incorrect decisions rendered based on output from the ML model, computing, for each segment in the set of segments and based on the budget, a candidate cutoff value from the ML model for rendering decisions, rendering, for each data entry in a current set of data, a current decision based on a configured cutoff value and a shadow decision based on the candidate cutoff value for a segment of the set of segments associated with the data entry, and promoting the candidate cutoff value to replace the configured cutoff value, for rendering subsequent decisions for a subsequent set of data, based on comparing the shadow decisions for the current set of data based on the budget for incorrect decisions.

In another example, a non-transitory computer-readable device storing instructions thereon that, when executed by a computing device, cause the computing device to perform operations for rendering decisions based on ML model output is provided. The operations include grouping historical data for a division of interest into a set of segments based on a value of one or more parameters, obtaining, for the division of interest, a budget for error tolerance for decisions rendered based on output from the ML model, computing, for each segment in the set of segments and based on the budget, a candidate cutoff value from the ML model for rendering decisions, rendering, for each data entry in a current set of data, a current decision based on a configured cutoff value and a shadow decision based on the candidate cutoff value for a segment of the set of segments associated with the data entry, and promoting the candidate cutoff value to replace the configured cutoff value, for rendering subsequent decisions for a subsequent set of data, based on comparing the shadow decisions for the current set of data based on the budget for incorrect decisions.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

Figure 1 is a schematic diagram of an example of a device for improving decisions rendered based on machine learning (ML) output, in accordance with aspects described herein.
Figure 2 illustrates a data flow of event data through an ML service and decisioning service, in accordance with aspects described herein.
Figure 3 illustrates a data flow among components described in Figure 1, in accordance with aspects described herein.
Figure 4 is a flowchart of an example of a method for improving decisions rendered based on ML model output, in accordance with aspects described herein.
Figure 5 is a schematic diagram of an example of a device for performing functions described herein, in accordance with aspects described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well-known components are shown in block diagram form in order to avoid obscuring such concepts.

This disclosure describes various examples related to improving decisions that are rendered based on machine learning (ML) model output. In an example, the process of determining or rendering decisions from data and ML model can be automated based on a budget for error tolerance (e.g., incorrect decisions). For example, a historical set of data for a division of interest can be separated into segments based on certain parameter values, and the division of interest can be associated with a budget for error tolerance. For example, the division of interest may include a division of a business that can have its own differential fraud risk tolerance, such as a certain department, product line, subscription or subscription levels offered in products for the business, or other divisions or layers of the business or associated products. Based on the budget, candidate cutoff values for ML model output can be computed for each segment and provided to a decision rendering process for producing shadow decisions based on the candidate cutoff values. The shadow decisions can be computed in conjunction with real decisions for a current set of data that are based on current cutoff values for the ML output, which can facilitate determining the optimization while the decision rendering process is in execution. The shadow decisions can be compared based on the budget to evaluate performance of the cutoff candidate values, and based on the performance, one or more of the cutoff candidate values may be promoted to current cutoff values. In one example, the performance of the candidate cutoff values can be provided via a user interface (e.g., to a user) to facilitate an approval process for promoting the candidate cutoff values.

From a data science perspective, a ML hyperparameter optimization can be provided for determining optimal inputs for an optimization problem being solved. The inputs can include the segments as well as an amount of historical data that may provide an optimal out-of-sample business metric performance. A multiple-choice knapsack solving algorithm can be implemented to determine the optimal amount of an output value subject to a fixed budget. Compared to a segment-by-segment approach, aspects described herein can globally and simultaneously optimize across all segments, enabling tradeoffs that may be unknown when using the segment-by-segment approach. This can yield superior business metric performance. Translation from the data science layer to the software decisioning layer can be provided, which can include validating and/or translating output into code that a decision rendering process can deploy. The decision rendering process can then deploy into a shadow environment to gather information for evaluation, and based on the evaluation, output values can be deployed in the production environment where the values match expectations. In this regard, aspects described herein can provide a fully automated (or mostly automated), self-updating business decision layer.

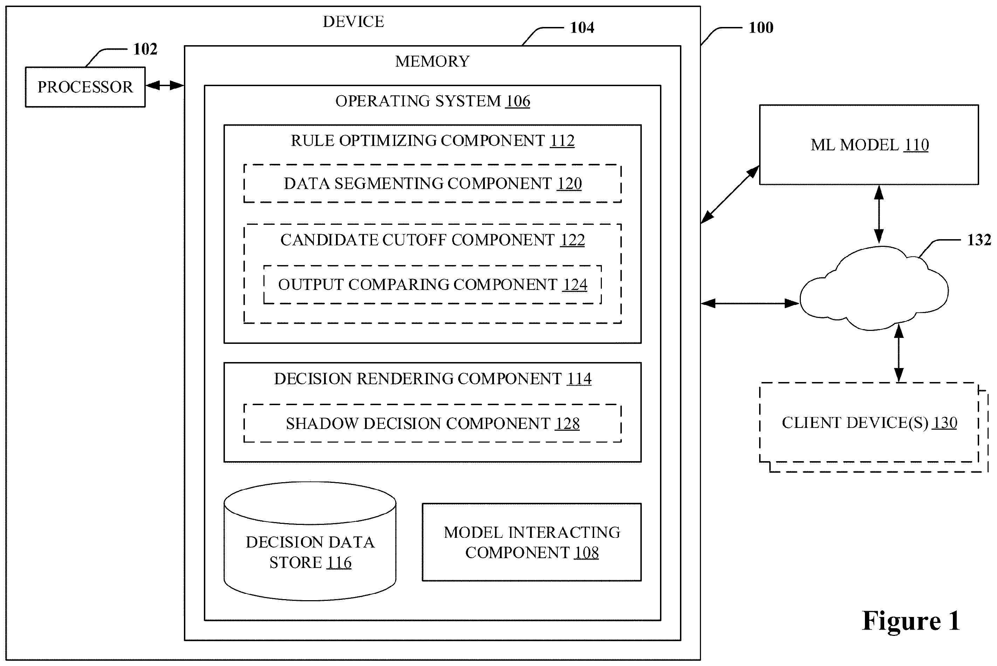

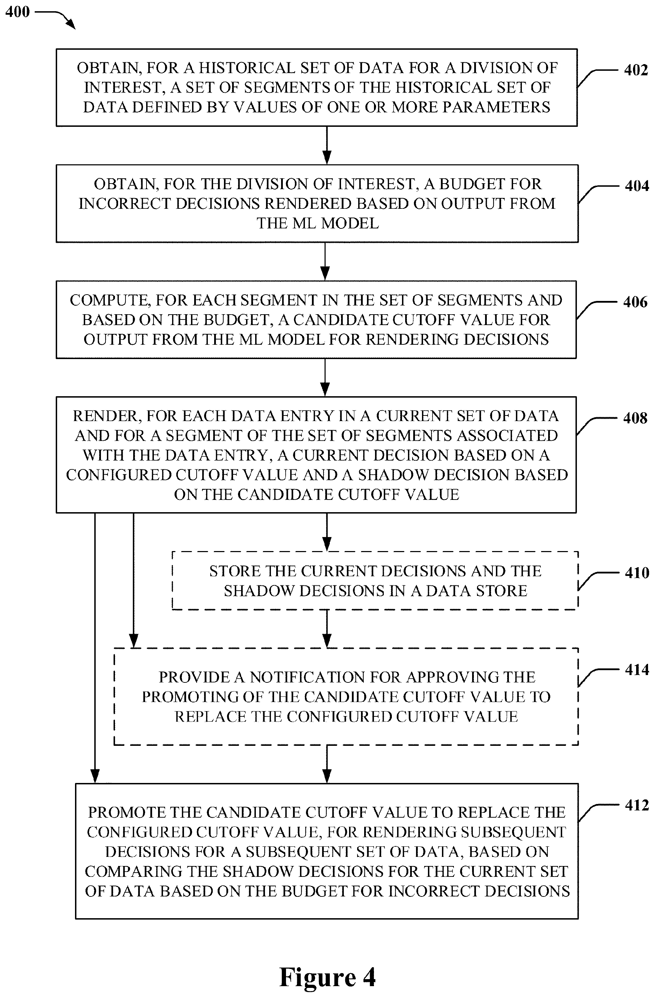

Turning now to Figures 1-5, examples are depicted with reference to one or more components and one or more methods that may perform the actions or operations described herein, where components and/or actions/operations in dashed line may be optional. Although the operations described below in Figure 4 are presented in a particular order and/or as being performed by an example component, the ordering of the actions and the components performing the actions may be varied, in some examples, depending on the implementation. Moreover, in some examples, one or more of the actions, functions, and/or described components may be performed by a specially programmed processor, a processor executing specially-programmed software or computer-readable media, or by any other combination of a hardware component and/or a software component capable of performing the described actions or functions.

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processors may in combination execute the respective subset of instruction to accomplish performing actions X, Y, and Z. Alternatively, a single processor may execute the instructions stored on a single memory, or distributed across multiple memories, to accomplish performing actions X, Y, and Z.

Figure 1 is a schematic diagram of an example of a device 100 (e.g., a computing device) for improving decisions rendered based on ML output, in accordance with aspects described herein. In an example, device 100 can include one or more processors 102 and/or a memory/memories 104 configured to execute or store instructions or other parameters related to providing an operating system 106, which can execute one or more applications or processes. For example, processor(s) 102 and memory/memories 104 may be separate components communicatively coupled by a bus (e.g., on a motherboard or other portion of a computing device, on an integrated circuit, such as a system on a chip (SoC), etc.), components integrated within one another (e.g., processor(s) 102 can include the memory/memories 104 as an on-board component), and/or the like. Memory/memories 104 may store instructions, parameters, data structures, etc. for use/execution by processor(s) 102 to perform functions described herein. In another example, processor(s) 102 and/or memory/memories 104 can be distributed over multiple devices or physical computing nodes in a network (e.g., in a cloud-based computing platform) for providing the functions of the various components described herein.

In one example, the operating system 106 can execute one or more applications or processes, such as, but not limited to, a model interacting component 108 for communicating with a ML model 110 for providing input thereto from a set of data and receiving an output based on data used to train the ML model 110, a rule optimizing component 112 for generating optimized rules for rendering decisions based on output from the ML model 110, and/or a decision rendering component 114 for rendering decisions based on output from the ML model 110 and one or more rules regarding segments and/or cutoff output values for the segments and storing the decisions and/or related parameters in a decision data store 116. In an example, rule optimizing component 112 can include a data segmenting component 120 for generating a segmentation of a data set into segments based on values of one or more parameters in the data set, and/or a candidate cutoff component 122 for generating candidate cutoff values for ML model output that achieve a goal for rendering decisions, such as a budget for error tolerance (e.g., incorrect decisions). In an example, candidate cutoff component 122 can include an output comparing component 124 for comparing output based on candidate cutoff values for determining performance of the candidate cutoff values. In an example, decision rendering component 114 may include a shadow decision component 128 for rendering shadow decisions, based on candidate cutoff values for the ML model output, alongside of current decisions based on current configured cutoff values for the ML model output. In an example, the components 108, 112, 114, 120, 122, 124, and/or 126, and/or decision data store 116, can be included in, or implemented by, the device 100 and/or in other devices (e.g., in a cloud-computing environment or cloud-based computing platform), but are described herein as provided by the device 100 for ease of explanation. Indeed, in some examples, device 100 can be provided by multiple devices or nodes of a cloud-based computing platform.

In an example, device 100 can communicate with one or more client devices 130 for providing a service thereto, where the service includes device 100 communicating with ML model 110 to render a decision for the one or more client devices 130. For example, device 100 can communicate with the one or more client devices 130, and/or with ML model 110 or a device that maintains the ML model 110, over a network 132 (e.g., the Internet and/or one or more corresponding devices that can access the Internet, or other networks). In one specific example, client device(s) 130 can request a transaction using a service provided by device 100, and device 100 can assess the transaction for risk by using the ML model 110 to generate a risk score. In this example, decision rendering component 114 can render a decision on whether to allow the transaction based on the risk score received from the ML model 110 and other rules related to a segment corresponding to the transaction, such as a cutoff value for the risk score for transactions in the segment. Setting the cutoff values for risk scores in specific segments, however, may be a tedious process and conventional segment-by-segment approaches may not consider the impact over multiple segments. Aspects described herein relate to automating rule optimization to select, through execution of the decision rendering component 114 on shadow decisions during runtime, cutoff values that achieve a desired business decision.

As described, for example, given a set of data from client device(s) 130, model interacting component 108 can conventionally provide at least a portion of the data, or data generated based on the set of data, to the ML model 110 and can receive an output value from the ML model 110. In this example, decision rendering component 114 can render a decision for the client device(s) 130 based on the ML model 110 output and based on one or more rules. For example, for given data from a client device 130, decision rendering component 114 can classify the data into a segment based on a value of one or more parameters in the data, and can obtain a configured cutoff value for the ML model 110 output for the segment. Decision rendering component 114 can the compare the ML model 110 output for the data to the configured cutoff value to render a decision for the data from the client device 130.

As described above, this can include a decision regarding transaction fraud, where the data from the client device 130 includes data contributing to fraud analysis that can be considered by the ML model 110 in the aggregate, the output from the ML model 110 can include a risk score, and the decision can be rendered regarding whether the risk score achieves a cutoff value configured for a segment of the transaction. In a specific example of fraud analysis, the data from the client device 130 can be based on a division of interest, such as a product or service, requested by the client device 130, a source for the request (e.g., a website or portal used to request the transaction), a location of the client device 130, an internet protocol (IP) address of the client device 130, a user account history for purchases, etc. Model interacting component 108 can provide this information to the ML model 110 to receive a risk score. Based on business decisions, however, there can be different error tolerances (e.g., budget for incorrect fraud decisions) for different divisions of interest. For example, error tolerance for purchasing an expensive product may be higher than that for a nominally priced service, as the loss for a fraudulent transaction may be higher for the expensive product. Aspects described herein relate to evaluating and setting segment-specific cutoff values for the ML model 110 output for a division of interest based on an associated error tolerance.

For example, given a set of historical data from client device(s) 130, which may be associated with a division of interest, data segmenting component 120 can generate segments for the historical data set based on values of one or more parameters, and candidate cutoff component 122 can generate, for each segment, candidate cutoff values for ML model output. In this example, candidate cutoff component 122 can provide the candidate cutoff values to the decision rendering component 114 for rendering shadow decisions given the candidate cutoff values. For example, when rendering decisions for a current set of data, as described in the example above, shadow decision component 128 can also render shadow decisions for the current set of data based on the candidate cutoff values. In an example, decision rendering component 114 can store the actual decisions and shadow decisions for the current data set, and/or related information in the decision data store 116. In an example, output comparing component 124 can periodically evaluate the output of the shadow decisions to determine performance of the candidate cutoff values. For example, rule optimizing component 112 can determine whether and/or when to promote a candidate cutoff value to a configured cutoff value based on the performance, or based on providing performance data via a user interface to facilitate user approval of promoting the candidate cutoff value.

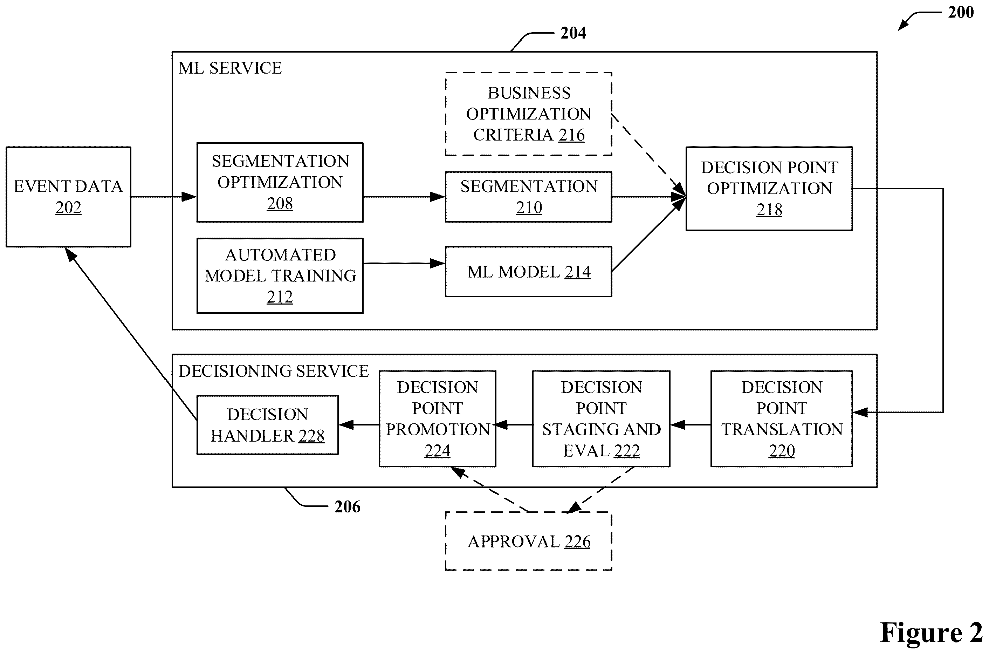

Figure 2 illustrates a data flow 200 of event data 202 through an ML service 204 and decisioning service 206, in accordance with aspects described herein. For example, one or more components 108, 112, 114, 120, 122, 124, and/or 126 described in Figure 1 can provide one or more of the functions described in reference to Figure 2 and/or the ML service 204 or decisioning service 206. The ML service 204 can include a platform that performs the end-to-end transformation from raw event data to optimized decision points through a series of intermediate components including preprocessing components and algorithmic decision point optimization. The decisioning service 206 can render a decision as output of applying a decision point to model score(s) to allow or reject an event.

For example, event data 202 (e.g., data from one or more client devices 130) can be provided to a segmentation optimization 208 for determining an optimal set of segments for the event data. The event data can include, in one example, measurable attributes of an event within a prediction system. A segment can include, in one example, a grouping of events defined by matching criteria against event data attributes (e.g., matching values of one or more parameters of the event data). The segmentation optimization 208 can include an optimization layer that takes in many possible data attributes as input and finds an optimal combination of them. As an example, the algorithm may train a decision tree fitting user-input criteria such as maximum number of total segments, a minimum number of observations to create a split in the tree, among other parameters. The data attributes themselves can be any attributes about the event that can be decisioned. The segmentation optimization 208, which can be provided by a rule optimizing component 112, data segmenting component 120, etc., as described herein, can generate a segmentation 210 for the event data.

The automated model training 212 can provide a procedure to train probabilistic model(s), such as ML model 214, which can be different from ML model 110 used to provide an output for event data. In particular, using and/or training ML model 214 with combination of the probabilistic model score(s) (e.g., cutoff value for ML model 110 output) and segments can be used to define decision points. A decision point can include the combination of a segment with the model score(s) (e.g., cutoff value for ML model 110 output) to determine a decision.

In an example, the segmentation 210, output from ML model 214 on the segments and associated decision points, and/or business optimization criteria 216 may be used as part of a decision point optimization 218. For example, the decision point optimization 218 can determine decision points given inputs of segments, probabilistic model score(s), and/or business optimization criteria. The decision point optimization 218 can be represented as a multiple-choice knapsack solver where there can be a fixed budget of events that can be rejected with a goal of maximizing another metric (e.g. fraud capture). In an example, all (or many) of the inputs to the decision point optimization 218 can be configurable to promote flexibility of the system to substantially any given decision point problem. The output can include a set of decision points dictating the optimal threshold(s) at which an event in a given segment should be rejected (e.g. if segment A and model 1 > 150 and model 2 > 200 then reject). Based on using the multiple-choice knapsack, each segment can be guaranteed to have at least one decision point to ensure full coverage of all segments. For example, rule optimizing component 112, candidate cutoff component 122, etc. can produce the decision points.

The decision point optimization 218 can provide the determined decision points to decision point translation 220. In an example, decision point translation 220 can translate the optimal decision points from the ML service 204 into code that can be directly implemented in the decisioning service 206. For example, decision point translation 220 can assemble the appropriate concatenations of underlying data attributes that define the segments and transform the model score(s) if necessary. The translated decision points can be delivered to the ML service 204 for activation in data point staging and evaluation 222. In an example, data point staging and evaluation 222 can include recording decisions that may be produced by a new set of candidate decision points. The decisioning service 206 can maintain two sets of decision points for each model - live and shadow. For each event, the decision handler 228 can be invoked for the live and shadow decision points. The decisioning service 206 can render its decision based on the live decision point but can also output the decision rendered from the shadow decision point to data storage. The decision handler 228 can consume decision points to render an allow or reject decision on an event. The decision handler 228 can locate the decision point for the segment of the event and invoke the ML model 110 to produce a score for the current event. Then the decision handler 228 can render a decision by evaluating the model score against the decision point. For example, decision rendering component 114 and/or shadow decision component 128 can provide the decisioning service 206 and/or functions thereof, such as decision point staging and evaluation 222, decision handler 228, etc.

In an example, decision point promotion 224 can include activating staging decision points after verifying their performance. The decision point promotion 224 can consume the live and shadow decisions rendered by decision point staging and evaluation 222. The decision point promotion 224 can calculate the performance of the live and shadow sets against the same criteria used by the optimization algorithm. After an observation period, which may be user-defined, performance can be evaluated. If the shadow decision points produce less optimal performance, those points may not be promoted for live decisions. If the performance improves, decision point promotion 224 can promote the shadow decision points (e.g., candidate cutoff values) live decision points (e.g., configured candidate cutoff values). In one example, decision point promotion 224 may be subject to an approval 226, which may include a user using an interface to approve a presented promotion suggestion for a decision point (e.g., cutoff value).

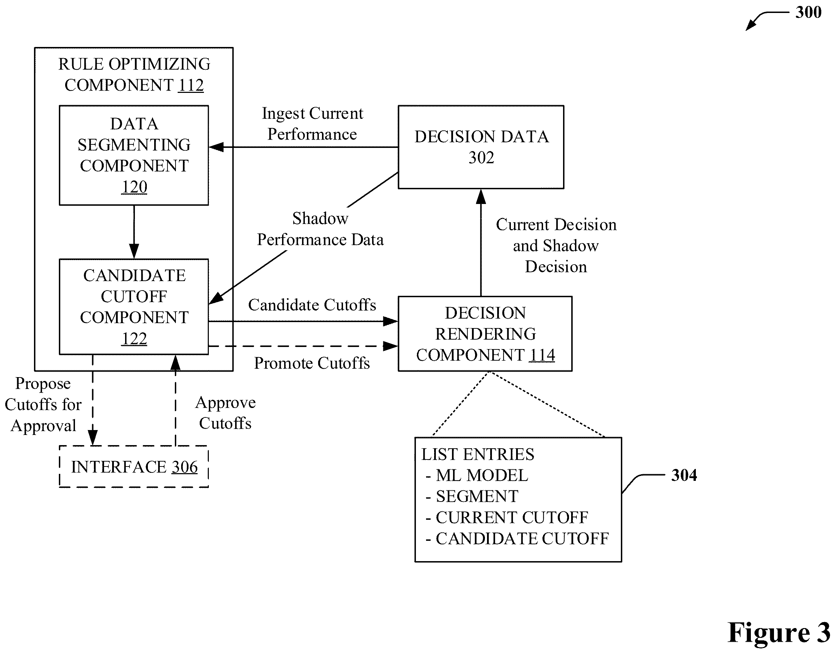

Figure 3 illustrates a data flow 300 among components described in Figure 1, in accordance with aspects described herein. For example, data segmenting component 120 can ingest current performance data from the decision data 302 stored in a decision data store 116. The current performance data can include data sets for which decisions are rendered by decision rendering component 114. In an example, data segmenting component 120 can generate segments, defined by certain values for one or more parameters, for the data sets, and/or candidate cutoff component 122 can generate candidate cutoff values for ML model 110 output for each segment. In an example, candidate cutoff component 122 can publish the candidate cutoffs to decision rendering component 114 for rendering shadow decisions based on the candidate cutoffs.

For example, decision rendering component 114 can store or include list entries 304 for data for which decisions are to be rendered. The list entries 304 can each include an indication of a ML model to which to provide the data and receive a corresponding output (e.g., ML model 110), an indication of the segment associated with the data (e.g., as determined by data segmenting component 120 or otherwise), a current cutoff configured for the segment, and a candidate cutoff, received from candidate cutoff component 122, to be considered for the segment. Decision rendering component 114 can execute to render, for a current data set, current decisions based on the current cutoff and shadow decisions based on the candidate cutoff. Decision rendering component 114 can store the decisions or related information in decision data 302.

Periodically, or based on an event or specified process, candidate cutoff component 122 can obtain the shadow decisions or corresponding shadow performance data from decision data 302 to evaluate performance of the candidate cutoffs. For candidate cutoffs achieving a desired level of performance (e.g., where the candidate cutoff value yields decisions within a budget for incorrect decisions for a division of interest), candidate cutoff component 122 can promote the candidate cutoffs as configured cutoffs in decision rendering component 114. In one example, candidate cutoff component 122 can propose the candidate cutoffs for approval to an interface 306, and the candidate cutoffs can be approved for promotion via interaction with the interface 306 (e.g., by a user).

Figure 4 is a flowchart of an example of a method 400 for improving decisions rendered based on ML model output, in accordance with aspects described herein. For example, method 400 can be performed by a device 100 or other device, and/or one or more components thereof, for determining segments for data, evaluating candidate cutoff values for the segments alongside real-time decision rendering for data, and/or promoting candidate cutoff values based on performance.

In method 400, at action 402, for a historical set of data for a division of interest, a set of segments can be obtained defined by values of one or more parameters. In an example, data segmenting component 120, e.g., in conjunction with one or more processors 102, memory/memories 104, operating system 106, rule optimizing component 112, etc., can obtain, for the historical set of data for the division of interest, the set of segments of the historical set of data defined by values of one or more parameters. In an example, as described, model interacting component 108 can have provided the historical set of data to ML model 110 in a previous execution, and decision rendering component 114 can have rendered decisions on the output of ML model 110. In an example, data segmenting component 120 can analyze the historical set of data to determine different segments represented by the data based on values of one or more parameters in the data. For example, data segmenting component 120 can include an optimization and hyper-parameter tuning and validation process to determine the segmentation. In an example, data segmenting component 120 can include, in generating the segmentation, each parameter that does not exceed a cardinality threshold. For example, an IP address may not be used to generate segments as its cardinality can be high (e.g., different for each event, or almost all events) in the set of data. In addition, data segmenting component 120 may exclude risk models as they may be separately used downstream.

In an example, data segmenting component 120 can train a single decision tree with a number of leaves (which may be user-defined) serving as the segmentation for downstream cutoffs. In one example, candidate cutoff component 122 can compute candidate cutoffs for each segment as part of this process, and/or the computed candidate cutoffs can be used to finalize a segmentation. For example, different decision tree segmentations in conjunction with their computed candidate cutoffs can be evaluated (e.g., by a user via a user interface presenting the information) for determining a final segmentation. In an example, data segmenting component 120 can append leaf predictions to the original data, which can be used for determining the candidate cutoff values. In another example, data segmenting component 120 can output, to a user interface, an indication of mapping of the tree to allow a user to understand the structure and risk splitters. For example, a user can determine a final segmentation based on one or more of an overall business metric performance of a given segmentation and candidate cutoff combination, a complexity associated with the segmentation (e.g., fewer segments may be more favorable as it can reduce the likelihood of overfit), or substantially any caveat that may arise from the way the data segmenting component 120 created the segments (e.g. a very precise range of transaction parameter values making up a segment could be proxy for a specific product or set of products and may result in a better segmentation that using specific product identifiers for the segmentation), and/or the like.

In method 400, at action 404, for the division of interest, a budget for incorrect decisions rendered based on output from the ML model can be obtained. In an example, data segmenting component 120, e.g., in conjunction with one or more processors 102, memory/memories 104, operating system 106, rule optimizing component 112, etc., can obtain, for the division of interest, the budget for incorrect decisions rendered based on output from the ML model. For example, the budget can be configured using an interface (e.g., by a user) or otherwise specified, to allow data segmenting component 120 to obtain the budget. In one example, the budget can include business optimization criteria 216 described in Figure 2. For example, the budget can be provided in advance as a static value, and may include some upper limit on incorrect decisions. In some specific examples, the budget may be qualitatively measured based on an expectation around customer experience, or quantitatively determined based on available capacity of service agents to help customers who were incorrectly decisioned.

In method 400, at action 406, for each segment in the set of segments and based on the budget, a candidate cutoff value for output from the ML model can be computed for rendering decisions. In an example, candidate cutoff component 122, e.g., in conjunction with one or more processors 102, memory/memories 104, operating system 106, rule optimizing component 112, etc., can compute, for each segment in the set of segments and based on the budget, the candidate cutoff value for output from the ML model for rendering decisions. For example, candidate cutoff component 122 can compute the candidate cutoff values for one segment based on other segments or otherwise in totality based on multiple segments to optimize the decision process for all segments (e.g., as described above in reference to decision point optimization 218 in Figure 2).

In method 400, at action 408, for each data entry in a current set of data, and for a segment of the set of segments associated with the data entry, a current decision can be rendered based on a configured cutoff value and a shadow decision can be rendered based on the candidate cutoff value. In an example, decision rendering component 114, e.g., in conjunction with one or more processors 102, memory/memories 104, operating system 106, etc., can render, for each data entry in a current set of data and for a segment of the set of segments associated with the data entry, the current decision based on a configured cutoff value and (e.g., using shadow decision component 128) a shadow decision based on the candidate cutoff value. For example, decision rendering component 114 can determine the segment associated with the data entry, which can be based on comparing a value of one or more parameters in the data entry to values of the one or more parameters defined for each of the segments. Based on the determined segment, decision rendering component 114 can obtain the corresponding configured cutoff value and candidate cutoff value. In addition, for example, model interacting component 108 can provide input from the data entry to the ML model 110 and/or can select the ML model or other associated data to provide as input to the ML model 110 based on the segment of the data entry. In an example, model interacting component 108 can receive output from the ML model 110 for the provided input. In this example, decision rendering component 114 can render the current decision based on comparing the ML model 110 output to the configured cutoff and can render (e.g., via shadow decision component 128) the shadow decision based on comparing the ML model 110 output to the candidate cutoff. Decision rendering component 114 can provide the current decision to the client device 130 and can store at least the shadow decision, or related information, in the decision data store 116. In an example, decision rendering component 114 can perform the same decision rendering system or process to render the current decision and the shadow decision for one data entry in the current set of data before moving to a next data entry.

In method 400, optionally at action 410, the current decisions and the shadow decisions can be stored in a data store. In an example, decision rendering component 114, e.g., in conjunction with one or more processors 102, memory/memories 104, operating system 106, etc., can store the current decisions and the shadow decisions, or related information in a data store, such as decision data store 116.

In method 400, at action 412, a candidate cutoff value can be promoted to replace a configured cutoff value, for rendering subsequent decisions for a subsequent set of data, based on comparing the shadow decisions for the current set of data based on the budget for incorrect decisions. In an example, output comparing component 124, e.g., in conjunction with one or more processors 102, memory/memories 104, operating system 106, rule optimizing component 112, candidate cutoff component 122, etc., can promote the candidate cutoff value to replace the configured cutoff value, for rendering subsequent decisions for a subset set of data, based on comparing the shadow decisions for the current set of data based on the budget for incorrect decisions. For example, output comparing component 124 can compare the performance of the candidate cutoff value in rendering the shadow decision against the budget for incorrect decisions for a segment corresponding to the shadow decision. In one example, output comparing component 124 can compare the performance of the candidate cutoff value in rendering shadow decisions to performance of the configured cutoff value in rendering actual decisions for the segment against the budget to analyze which cutoff provides better performance. For example, output comparing component 124 can periodically (or based on an event or other defined or specified occurrence) obtain and compare the performance data from the decision data store 116. Output comparing component 124 can promote candidate cutoff values that out-perform their corresponding configured cutoff values (e.g., by a threshold margin or otherwise).

In method 400, optionally at action 414, a notification for approving the promoting of the candidate cutoff value to replace the configured cutoff value can be provided. In an example, output comparing component 124, e.g., in conjunction with one or more processors 102, memory/memories 104, operating system 106, rule optimizing component 112, candidate cutoff component 122, etc., can provide, via an interface (e.g., a user interface for interaction by a user), the notification for approving the promoting of the candidate cutoff value to replace the configured cutoff value. For example, output comparing component 124 can include, on the interface, an indication of the performance of the candidate cutoff value (e.g., relative to the configured cutoff value or otherwise). In an example, output comparing component 124 can promote the candidate cutoff value based on receiving approval via the interface.

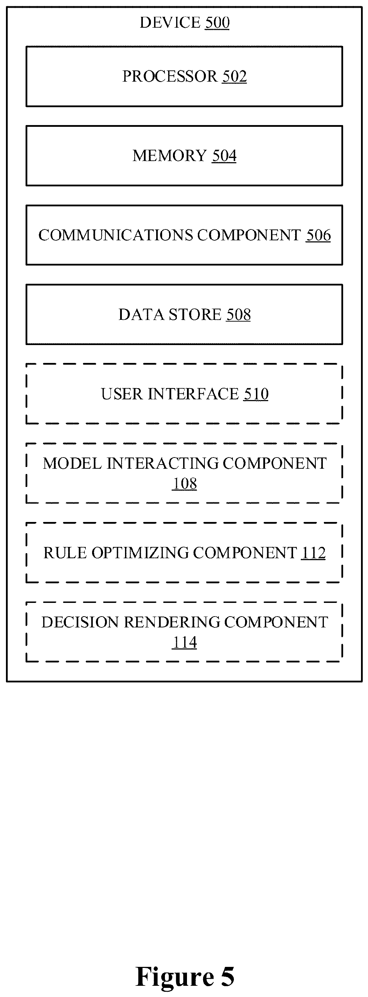

Figure 5 illustrates an example of device 500 including additional optional component details as those shown in Figure 1. In one aspect, device 500 may include processor 502, which may be similar to processor 102 for carrying out processing functions associated with one or more of components and functions described herein. Processor 502 can include a single or multiple set of processors or multi-core processors. Moreover, processor 502 can be implemented as an integrated processing system and/or a distributed processing system.

Device 500 may further include memory 504, which may be similar to memory 104 such as for storing local versions of operating systems (or components thereof) and/or applications being executed by processor 502, such as a model interacting component 108, rule optimizing component 112, decision rendering component 114, one or more components thereof, etc. Memory 504 can include a type of memory usable by a computer, such as random-access memory (RAM), read only memory (ROM), tapes, magnetic discs, optical discs, volatile memory, non-volatile memory, and any combination thereof.

Further, device 500 may include a communications component 506 that provides for establishing and maintaining communications with one or more other devices, parties, entities, etc. utilizing hardware, software, and services as described herein. Communications component 506 may carry communications between components on device 500, as well as between device 500 and external devices, such as devices located across a communications network and/or devices serially or locally connected to device 500. For example, communications component 506 may include one or more buses, and may further include transmit chain components and receive chain components associated with a wireless or wired transmitter and receiver, respectively, operable for interfacing with external devices.

Additionally, device 500 may include a data store 508, which can be any suitable combination of hardware and/or software, which provides for mass storage of information, databases, and programs employed in connection with aspects described herein. For example, data store 508 may be or may include a data repository for operating systems (or components thereof), applications, related parameters, etc.) not currently being executed by processor 502. In addition, data store 508 may be a data repository for a model interacting component 108, rule optimizing component 112, decision rendering component 114, one or more components thereof, and/or one or more other components of the device 500.

Device 500 may optionally include a user interface component 510 operable to receive inputs from a user of device 500 and further operable to generate outputs for presentation to the user. For example, user interface component 510 may provide and/or process interaction with interface 306, as described herein. User interface component 510 may include one or more input devices, including but not limited to a keyboard, a number pad, a mouse, a touch-sensitive display, a navigation key, a function key, a microphone, a voice recognition component, a gesture recognition component, a depth sensor, a gaze tracking sensor, a switch/button, any other mechanism capable of receiving an input from a user, or any combination thereof. Further, user interface component 510 may include one or more output devices, including but not limited to a display, a speaker, a haptic feedback mechanism, a printer, any other mechanism capable of presenting an output to a user, or any combination thereof.

Some further example aspects are provided below.

Aspect 1 is a method for rendering decisions based on ML model output that includes obtaining, for a historical set of data for a division of interest, a set of segments of the historical set of data defined by values of one or more parameter, obtaining, for the division of interest, a budget for incorrect decisions rendered based on output from the ML model, computing, for each segment in the set of segments and based on the budget, a candidate cutoff value from the ML model for rendering decisions, rendering, for each data entry in a current set of data, a current decision based on a configured cutoff value and a shadow decision based on the candidate cutoff value for a segment of the set of segments associated with the data entry, and promoting the candidate cutoff value to replace the configured cutoff value, for rendering subsequent decisions for a subsequent set of data, based on comparing the shadow decisions for the current set of data based on the budget for incorrect decisions.

In Aspect 2, the method of Aspect 1 includes providing a notification for approving the promoting of the candidate cutoff value to replace the configured cutoff value, where promoting of the candidate cutoff value to replace the configured cutoff value is based on receiving an approval.

In Aspect 3, the method of any of Aspects 1 or 2 includes storing the current decisions and the shadow decisions in a data store, where comparing the shadow decisions includes comparing at least a portion of the shadow decisions to at least a portion of the current decisions stored in the data store based on the budget for incorrect decisions.

In Aspect 4, the method of any of Aspects 1 to 3 includes where rendering the current decision and the shadow decision are performed for a given data entry in the current set of data, using the same decision rendering system, before rendering another current decision and another shadow decision for a different data entry in the current set of data.

In Aspect 5, the method of any of Aspects 1 to 4 includes where computing the candidate cutoff values includes selecting a candidate cutoff value for each segment in the set of segments that complies with the budget for incorrect decisions.

In Aspect 6, the method of any of Aspects 1 to 5 includes where obtaining the set of segments includes determining the one or more parameters from a set of multiple parameters in the historical set of data based at least in part on the one or more parameters having a cardinality that is less than a threshold, and grouping the historical set of data into the set of segments for a given value of the one or more parameters.

In Aspect 7, the method of Aspect 6 includes where grouping the historical set of data into the set of segments is based on training a decision tree fitting user-input criteria including a maximum number of total segments and a minimum number of observations to create a split in the decision tree.

In Aspect 8, the method of any of Aspects 1 to 7 includes where obtaining the set of segments includes determining the one or more parameters from a set of multiple parameters in the historical set of data based at least in part on the one or more parameters having a cardinality that is less than a threshold, grouping the historical set of data into an intermediate set of segments for a given value of the one or more parameters, computing, for each segment in the intermediate set of segments and based on the budget, a segment candidate cutoff value from the ML model for rendering decisions, and determining the set of segments based on evaluating each segment and the segment candidate cutoff value for each segment in the intermediate set of segments.

In Aspect 9, the method of any of Aspects 1 to 8 includes where the historical set of data and the current set of data correspond to transactions, where the ML model outputs a risk score for rendering a decision regarding fraudulent transactions, and where the candidate cutoff value and the configured cutoff value correspond to risk score thresholds over which to declare a transaction as a fraudulent transaction.

Aspect 10 is an apparatus including one or more processors, one or more memories coupled with the one or more processors, and instructions stored in the one or more memories and operable, when executed by the one or more processors, to cause the apparatus to perform any of the methods of Aspects 1 to 9.

Aspect 11 is an apparatus for including means for performing any of the methods of Aspects 1 to 9.

Aspect 12 is one or more computer-readable media including code executable by one or more processors, the code including code for performing any of the methods of Aspects 1 to 9.

Aspect A is a device for rendering decisions based on machine learning, ML, model output, comprising: one or more memories storing instructions; and one or more processors coupled to the one or more memories and configured to execute the instructions to: group historical data for a division of interest into a set of segments based on a value of one or more parameters; obtain, for the division of interest, a budget for error tolerance for decisions rendered based on output from the ML model; compute, for each segment in the set of segments and based on the budget, a candidate cutoff value for ML model output for rendering decisions; rendering, for each data entry in a current set of data, a current decision based on a configured cutoff value and a shadow decision based on the candidate cutoff value for a segment of the set of segments associated with the data entry; storing information related to the shadow decision and the current decision in a data store; and promoting the candidate cutoff value to replace the configured cutoff value, for rendering subsequent decisions for a subsequent set of data, based on comparing the shadow decisions for the segment associated with the candidate cutoff value, obtained from the data store, based on the budget for incorrect decisions.

Aspect B is the device of Aspect A, wherein the one or more processors are further configured to provide a notification for approving the promoting of the candidate cutoff value to replace the configured cutoff value, wherein the one or more processors are configured to promote of the candidate cutoff value to replace the configured cutoff value is based on receiving an approval.

Aspect C is the device of Aspect B, wherein the one or more processors are configured to render the current decision and the shadow decision for a given data entry in the current set of data, using the same decision rendering system, before rendering another current decision and another shadow decision for a different data entry in the current set of data.

Aspect D is the device of any of Aspects A to C, wherein the one or more processors are configured to compute the candidate cutoff values including selecting the candidate cutoff output value for each segment in the set of segments that complies with the budget for incorrect decisions.

Aspect E is the device of any of Aspects A to D, wherein the one or more processors are configured to group the historical data into the set of segments at least in part by: determining the one or more parameters from a set of multiple parameters in the historical data based at least in part on the one or more parameters having a cardinality that is less than a threshold; and grouping the historical data into the set of segments for a given value of the one or more parameters.

Aspect F is the device of Aspect E, wherein the one or more processors are configured to group the historical data into the set of segments based on training a decision tree fitting user-input criteria including a maximum number of total segments and a minimum number of observations to create a split in the decision tree.

Aspect G is the device of any of Aspects A to D, wherein the one or more processors are configured to group the historical data into the set of segments at least in part by: determining the one or more parameters from a set of multiple parameters in the historical data based at least in part on the one or more parameters having a cardinality that is less than a threshold; grouping the historical data into an intermediate set of segments for a given value of the one or more parameters; computing, for each segment in the intermediate set of segments and based on the budget, a segment candidate cutoff value from the ML model for rendering decisions; and determining the set of segments based on evaluating each segment and the segment candidate cutoff value for each segment in the intermediate set of segments.

Aspect H is the device of any of Aspects A to G, wherein the historical data and the current set of data correspond to transactions, wherein the ML model outputs a risk score for rendering a decision regarding fraudulent transactions, and wherein the candidate cutoff value and the configured cutoff value correspond to risk score thresholds over which to declare a transaction as a fraudulent transaction.

Aspect 13 is a computer-readable device storing instructions thereon that, when executed by a computing device, cause the computing device to perform operations for rendering decisions based on machine learning, ML, model output, comprising: grouping historical data for a division of interest into a set of segments based on a value of one or more parameters; obtaining, for the division of interest, a budget for error tolerance for decisions rendered based on output from the ML model; computing, for each segment in the set of segments and based on the budget, a candidate cutoff value from the ML model for rendering decisions; rendering, for each data entry in a current set of data, a current decision based on a configured cutoff value and a shadow decision based on the candidate cutoff value for a segment of the set of segments associated with the data entry; and promoting the candidate cutoff value to replace the configured cutoff value, for rendering subsequent decisions for a subsequent set of data, based on comparing the shadow decisions for the current set of data based on the budget for incorrect decisions.

Aspect 14 is the computer-readable device of Aspect 13, in which the operations further comprise providing a notification for approving the promoting of the candidate cutoff value to replace the configured cutoff value, wherein promoting of the candidate cutoff value to replace the configured cutoff value is based on receiving an approval.

Aspect 15 is the computer-readable device of Aspect 13 or Aspect 14, in which the operations further comprising storing the current decisions and the shadow decisions in a data store, wherein comparing the shadow decisions includes comparing at least a portion of the shadow decisions to at least a portion of the current decisions stored in the data store based on the budget for incorrect decisions.

In another example for rendering decisions based on machine learning (ML) model output, a set of segments for a historical set of data for a division of interest, and associated budgets for the decision of interest, can be obtained. For each segment in the set, a budget for incorrect decisions rendered based on output from the ML model can be computed. For each data entry in a current set of data, a current decision can be rendered based on a configured cutoff value and also a shadow decision based on the candidate cutoff value for a segment of the set of segments associated with the data entry. The candidate cutoff value can be promoted to replace the configured cutoff value, for rendering subsequent decisions for a subsequent set of data, based on comparing the shadow decisions for the current set of data based on the budget for incorrect decisions

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more aspects, one or more of the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but is to be accorded the full scope consistent with the language claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described herein that are known or later come to be known to those of ordinary skill in the art are expressly included and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

## Claims

1. A device for rendering decisions based on machine learning, ML, model output, comprising:
one or more memories storing instructions; and
one or more processors coupled to the one or more memories and configured to execute the instructions to:
group historical data for a division of interest into a set of segments based on a value of one or more parameters;
obtain, for the division of interest, a budget for error tolerance for decisions rendered based on output from the ML model;
compute, for each segment in the set of segments and based on the budget, a candidate cutoff value for ML model output for rendering decisions;
rendering, for each data entry in a current set of data, a current decision based on a configured cutoff value and a shadow decision based on the candidate cutoff value for a segment of the set of segments associated with the data entry;
storing information related to the shadow decision and the current decision in a data store; and
promoting the candidate cutoff value to replace the configured cutoff value, for rendering subsequent decisions for a subsequent set of data, based on comparing the shadow decisions for the segment associated with the candidate cutoff value, obtained from the data store, based on the budget for incorrect decisions.

2. The device of claim 1, wherein the one or more processors are further configured to provide a notification for approving the promoting of the candidate cutoff value to replace the configured cutoff value, wherein the one or more processors are configured to promote of the candidate cutoff value to replace the configured cutoff value is based on receiving an approval, and
optionally, wherein the one or more processors are configured to render the current decision and the shadow decision for a given data entry in the current set of data, using the same decision rendering system, before rendering another current decision and another shadow decision for a different data entry in the current set of data.

3. The device of any of claims 1 to 2, wherein the one or more processors are configured to compute the candidate cutoff values including selecting the candidate cutoff output value for each segment in the set of segments that complies with the budget for incorrect decisions.

4. The device of any of claims 1 to 3, wherein the one or more processors are configured to group the historical data into the set of segments at least in part by:
determining the one or more parameters from a set of multiple parameters in the historical data based at least in part on the one or more parameters having a cardinality that is less than a threshold; and
grouping the historical data into the set of segments for a given value of the one or more parameters, and
optionally, wherein the one or more processors are configured to group the historical data into the set of segments based on training a decision tree fitting user-input criteria including a maximum number of total segments and a minimum number of observations to create a split in the decision tree.

5. The device of any of claims 1 to 3, wherein the one or more processors are configured to group the historical data into the set of segments at least in part by:
determining the one or more parameters from a set of multiple parameters in the historical data based at least in part on the one or more parameters having a cardinality that is less than a threshold;
grouping the historical data into an intermediate set of segments for a given value of the one or more parameters;
computing, for each segment in the intermediate set of segments and based on the budget, a segment candidate cutoff value from the ML model for rendering decisions; and
determining the set of segments based on evaluating each segment and the segment candidate cutoff value for each segment in the intermediate set of segments.

6. The device of any of claims 1 to 5, wherein the historical data and the current set of data correspond to transactions, wherein the ML model outputs a risk score for rendering a decision regarding fraudulent transactions, and wherein the candidate cutoff value and the configured cutoff value correspond to risk score thresholds over which to declare a transaction as a fraudulent transaction.

7. A computer-implemented method for rendering decisions based on machine learning, ML, model output, comprising:
obtaining, for a historical set of data for a division of interest, a set of segments of the historical set of data defined by a value of one or more parameters;
obtaining, for the division of interest, a budget for incorrect decisions rendered based on output from the ML model;
computing, for each segment in the set of segments and based on the budget, a candidate cutoff value from the ML model for rendering decisions;
rendering, for each data entry in a current set of data, a current decision based on a configured cutoff value and a shadow decision based on the candidate cutoff value for a segment of the set of segments associated with the data entry; and
promoting the candidate cutoff value to replace the configured cutoff value, for rendering subsequent decisions for a subsequent set of data, based on comparing the shadow decisions for the current set of data based on the budget for incorrect decisions.

8. The computer-implemented method of claim 7, further comprising providing a notification for approving the promoting of the candidate cutoff value to replace the configured cutoff value, wherein promoting of the candidate cutoff value to replace the configured cutoff value is based on receiving an approval and/or further comprising storing the current decisions and the shadow decisions in a data store, wherein comparing the shadow decisions includes comparing at least a portion of the shadow decisions to at least a portion of the current decisions stored in the data store based on the budget for incorrect decisions.

9. The computer-implemented method of any of claims 7 to 8, wherein rendering the current decision and the shadow decision are performed for a given data entry in the current set of data, using the same decision rendering system, before rendering another current decision and another shadow decision for a different data entry in the current set of data.

10. The computer-implemented method of any of claims 7 to 9, wherein computing the candidate cutoff values includes selecting a candidate cutoff value for each segment in the set of segments that complies with the budget for incorrect decisions.

11. The computer-implemented method of any of claims 7 to 10, wherein obtaining the set of segments includes:
determining the one or more parameters from a set of multiple parameters in the historical set of data based at least in part on the one or more parameters having a cardinality that is less than a threshold; and
grouping the historical set of data into the set of segments for a given value of the one or more parameters, and
optionally, wherein grouping the historical set of data into the set of segments is based on training a decision tree fitting user-input criteria including a maximum number of total segments and a minimum number of observations to create a split in the decision tree.

12. The computer-implemented method of any of claims 7 to 11, wherein obtaining the set of segments includes:
determining the one or more parameters from a set of multiple parameters in the historical set of data based at least in part on the one or more parameters having a cardinality that is less than a threshold;
grouping the historical set of data into an intermediate set of segments for a given value of the one or more parameters;
computing, for each segment in the intermediate set of segments and based on the budget, a segment candidate cutoff value from the ML model for rendering decisions; and
determining the set of segments based on evaluating each segment and the segment candidate cutoff value for each segment in the intermediate set of segments.

13. The computer-implemented method of any of claims 7 to 12, wherein the historical set of data and the current set of data correspond to transactions, wherein the ML model outputs a risk score for rendering a decision regarding fraudulent transactions, and wherein the candidate cutoff value and the configured cutoff value correspond to risk score thresholds over which to declare a transaction as a fraudulent transaction.

14. A computer-readable device storing instructions thereon that, when executed by a computing device, cause the computing device to perform operations for rendering decisions based on machine learning, ML, model output, comprising:
grouping historical data for a division of interest into a set of segments based on a value of one or more parameters;
obtaining, for the division of interest, a budget for error tolerance for decisions rendered based on output from the ML model;
computing, for each segment in the set of segments and based on the budget, a candidate cutoff value from the ML model for rendering decisions;
rendering, for each data entry in a current set of data, a current decision based on a configured cutoff value and a shadow decision based on the candidate cutoff value for a segment of the set of segments associated with the data entry; and
promoting the candidate cutoff value to replace the configured cutoff value, for rendering subsequent decisions for a subsequent set of data, based on comparing the shadow decisions for the current set of data based on the budget for incorrect decisions.

15. The computer-readable device of claim 13, the operations further comprising providing a notification for approving the promoting of the candidate cutoff value to replace the configured cutoff value, wherein promoting of the candidate cutoff value to replace the configured cutoff value is based on receiving an approval and/or the operations further comprising storing the current decisions and the shadow decisions in a data store, wherein comparing the shadow decisions includes comparing at least a portion of the shadow decisions to at least a portion of the current decisions stored in the data store based on the budget for incorrect decisions.
